# EUROPEAN PATENT APPLICATION

(11) **EP 1 348 488 A2**
(43) Date of publication of application: **01.10.2003**
(21) Application number: 03006292.1
(22) Date of filing: 23.03.2003
(51) Int. Cl.: B05B 13/02, B05B 15/04

(54) **Device for cleaning a conveyor belt for moving workpieces through a painting installation**

(30) Priority: 29.03.2002 IT MI20020667
(71) Applicant: Giardina Officine Aeromeccaniche S.p.A., 22060 Figino Serenza (CO) (IT)
(72) Inventor: Giardina, Gianni, 20038 Seregno (Milano) (IT); Romano, Michele, 20030 Lentate sul Seveso (Milano) (IT)
(74) Representative: Mayer, Hans Benno, Dipl.-Ing.

(57) **Zusammenfassung**

Vorrichtung zum Reinigen eines Bandes (1) für den Transport von Werkstücken durch eine Lackieranlage, wobei gegen die zu reinigende Oberfläche des Bandes (1) ein Kissen (4) aus porösem Material angedrückt wird und das Kissen (4) mit einer Flüssigkeit getränkt wird, die als Lösungsmittel für den Lack dient.

## Description

Die vorstehende Erfindung betrifft eine Vorrichtung zum Reinigen eines Bandes für den Transport von Werkstücken durch eine Lackieranlage.

Es ist vom Stand der Technik her bekannt, für das Beschichten von Werkstücken, die z.B. für die Herstellung von Möbeln oder anderen Gegenständen eingesetzt werden, plattenförmige oder profilierte Bauteile zu verwenden, die Lackieranlagen durchlaufen, die ein Transportband aufweisen, das um mehrere Rollen umgelenkt wird.

Am Beginn der Lackieranlage werden die zu lackierenden Teile auf das sich bewegende Band aufgelegt und durch die Lackieranlage gefördert, in welcher das aufzutragende Material z.B. unter Einsatz von Spritzpistolen aufgebracht wird, die sich gesteuert gegenüber dem geförderten Werkstück bewegen.

Es ist naheliegend, dass sich während der Beschichtungsvorgänge mittels Spritzverfahren ein Teil des Beschichtungsmateriales auch auf dem Förderband niederschlägt, aus diesem Grunde ist es erforderlich, das Förderband vor Beginn seiner Rücklaufbewegung zum Eingang der Lackieranlage zu reinigen, um dann am Einlauf der Anlage erneut über ein sauberes Förderband zu verfügen.

Dem Stand der Technik kann als bekannt entnommen werden, zum Reinigen eines Förderbandes für eine Lackieranlage Rakelblätter einzusetzen, die über einen mechanischen Vorgang unerwünschte Lackreste vom Transportband ablösen.

Um ein zufriedenstellendes Ergebnis zu erlangen, sind zahlreiche dieser Rakelblätter in Reihenfolge anzuordnen, ferner ist es notwendig, die Rakelblätter, die üblicherweise aus Federstahl bestehen, mit einer gewissen Kraft gegen das vorbeilaufende Förderband anzudrücken, diese Notwendigkeit führt zu einem schnellen Verschleiß des Förderbandes.

Berücksichtigt man, dass die genannten Förderbänder häufig aus mehreren Schichten unterschiedlicher Materialen bestehen, vergrößert sich die Gefahr, dass aufgrund eines Einwirkens zahlreicher Rakelblätter ein Beschädigen des Bandes eintritt.

Es sind auch Bürstenrollen bekannt geworden, welche in Behälter eintauchen, die unterhalb des Förderbandes angeordnet sind und ein Lösungsmittel aufnehmen.

Während der Drehbewegung der Bürstenwalze entnehmen diese das Lösungsmittel aus den Behältern und fördern das Lösungsmittel zum angetriebenen Förderband. Mit der Wirkung der Bürstenwalzen sowie der Wirkung der eingesetzten Lösungsmittel wird ein zufriedenstellender Reinigungsvorgang des Förderbandes nur dann erreicht, wenn die Lackablagerungen (overspray) auf dem Band nicht allzu groß sind.

Es ist vom Stand der Technik her auch bekannt geworden, eine Befeuchtungswalze vorzusehen, die Lösungsmittel aus einer unteren Wanne entnimmt. Diese rotierende Walze trägt eine gewisse Menge Lösungsmittel auf das Förderband auf und anschließend, unter Einsatz eines Rakelblattes, wird erneut der Versuch unternommen, die unerwünschten Lackablagerungen vom Förderband zu entfernen.

Der Nachteil der diesen bekannten Einrichtungen anhaftet, ist darin zu sehen, dass es nicht möglich ist, die beschriebenen Vorrichtungen an einem Trumm des Förderbandes anzuordnen, das sich in einer nahezu senkrechten Ebene befindet.

Desweiteren, bei Vorsehung von rotierenden Bürstenwalzen wird es unumgänglich sein, Antriebsmotore vorzusehen, die in explosionsgeschützter Ausführung, aufgrund der vorhandenen Lösungsmitteldämpfe, einzusetzen sind. Diese Notwendigkeit vergrößert die Fertigungs- und Betriebskosten der Anlagen.

Bei Vorsehen von zahlreichen Reinigungsrakeln wird es ferner unumgänglich sein, in Übereinstimmung mit den Rakelnblättern Gegendruckvorrichtungen auf einer Bandseite vorzusehen. Ferner sind Einstellvorrichtungen notwendig, um die Lage des Rakelblattes gegenüber dem vorbeilaufenden Band einzustellen und somit den Arbeitsdruck festzulegen, mit dem das Rakelblatt auf das Förderband einwirkt.

Es ist Aufgabe der vorstehenden Erfindung, die Nachteile des Standes der Technik zu vermeiden, und eine baulich einfacher gestaltete Vorrichtung vorzuschlagen, die trotz einfacher Bauweise außerordentlich wirkungsvoll in Bezug auf den gewünschten Reinigungseffekt eines Transportbandes in einer Spritzlackieranlage ist.

Erfindungsgemäß wird diese Aufgabe dadurch gelöst, dass gegen die zu reinigende Fläche eines Transportbandes ein aus porösem Material bestehendes Kissen angedrückt wird, das mit einer Flüssigkeit, die als Lacklösungsmittel dient, befeuchtet wird.

Dank der Vorsehung eines Reinigungskissens, welches auf das Transportband einwirkt, wird die Möglichkeit eröffnet, das Reinigungskissen sowohl entlang vertikal verlaufender als auch entlang horizontal verlaufender Abschnitte des Transportbandes anzuordnen.

Die Befeuchtung kann entsprechend den Porösitätseigenschaften des Kissens und in Abhängigkeit von den Reinigungserfordernissen des Bandes eingestellt werden. Es ist ferner möglich, mehrere Reinigungskissen mit unterschiedlicher Breite vorzusehen, ferner kann die Oberfläche des Kissens, die der zu reinigenden Bandfläche zugeordnet ist, entsprechend den Erfordernissen gewünschte Form aufweisen.

So kann das Reinigungskissen eine ebene Fläche, eine steigend und geneigt angeordnete Fläche oder eine abfallende und geneigt angeordnete Fläche oder spitz zusammenlaufende Reinigungsflächen aufweisen.

In vorteilhafter Weise, um das Reinigungskissen sauber zu halten, wird dem Reinigungskissen ein unter Druck stehendes Lösungsmittel zugeführt, welches dem Reinigungskissen auf jener Seite zugeführt wird, die der Fläche, die mit dem Förderband in Berührung steht, gegenüberliegt.

Der Erfindungsgegenstand wird nun genauer beschrieben und anhand eines Ausführungsbeispieles in den beigefügten Zeichnungen dargestellt:
Figur 1 zeigt im Querschnitt ein Reinigungskissen, das entlang eines vertikal verlaufenden Trummes des Transportbandes angeordnet ist,
Figur 2 zeigt ein Reinigungskissen, das unterhalb eines horizontal verlaufenden Trummes des Bandes angordnet ist, zusammen mit einer Wanne für das Zuführen einer Lösungsflüssigkeit,
Figur 3 zeigt ein verhältnismäßig schmal ausgebildetes Reinigungskissen mit einer Fläche, die geneigt zu dem zu reinigenden Band angeordnet ist,
Figur 4 zeigt eine zusätzlich vorgesehene Reinigungswalze,
Figur 5 zeigt eine Reinigungsrakel, die mit einer Sprühdüse zusammenarbeitet.

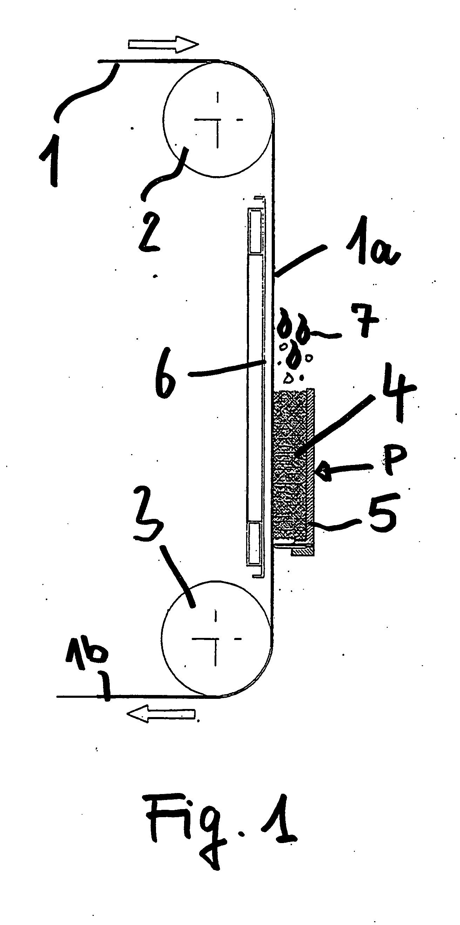

Wie der Figur 1 zu entnehmen ist, wird ein Transportband 1 unter Zuhilfenahme von Rollen 2 und 3 umgelenkt.

In Übereinstimmung mit dem vertikal angeordneten Trumm 1a des Bandes 1 ist ein Reinigungskissen 4 vorgesehen, welches in einen Aufnahmebehälter 5 eingesetzt ist.

Das Reinigungskissen 4 wird mit einstellbarem Druck P gegen die zu reinigende Oberfläche des Bandes 1a gedrückt.

Um eine unerwünschte Verformung des Trummes 1a des Förderbandes 1 aufgrund eines Einwirkens des Reinigungskissens 4 zu vermeiden, ist in Übereinstimmung mit dem Kissen 4, aber auf der dem Kissen gegenüberliegenden Seite des Trummes 1a des Bandes 1, ein Rahmen angeordnet, der eine Gegendruckfläche 6 aufweist.

In vorteilhafter Weise wird das Kissen 4, welches sich über die gesamte Breite des Bandes 1, 1a erstreckt, ständig mit einem Lösungsmittel befeuchtet, wie dies schematisch durch die Tropfen 7 in der Zeichnung verdeutlicht wird.

Um das Kissen 4 sauber zu halten, unter Berücksichtigung der Tatsache, dass durch das Kissen mehrere Kilogramm Lackreste/Stunde zu entfernen sind, wird vorgeschlagen, das Lösungsmittel unter Druck in das Kissen einzuspeisen, wodurch ein selbstreinigender Effekt des aus porösem Material bestehenden Kissens 4 eintritt.

In vorteilhafter Weise ist das Kissen aus einem widerstandsfähigen, porösen Material hergestellt. Das Material für das Reinigungskissen 4 ist derartig gewählt, dass auf der zum Bandabschnitt 1a gerichteten Seite das Kissen eine rauhe Oberfläche aufweist und eine Porosität besitzt, die es ermöglicht, die erforderliche Menge eines Lösungsmittels 7 zu speichern.

Folglich erfolgt ein mechanisches Einwirken auf den Bandabschnitt 1a nicht entlang einer sehr schmalen Wirkungslinie, wie dies der Fall bei Einsatz einer Bürstenwalze oder einer glatten Walze wäre.

Es wird auch nicht notwendig sein, zahlreiche Rakelblätter mit sehr scharfen Rakelschneiden einzusetzen, um auf das zu reinigende Band über eine sehr scharfe Kante einzuwirken. Bei Verwendung eines Reinigungskissens wird die Möglichkeit eröffnet, über einen gewünschten Verlauf auf das bewegte Band 1 einzuwirken, entsprechend der Breite des verwendeten Reinigungskissens 4.

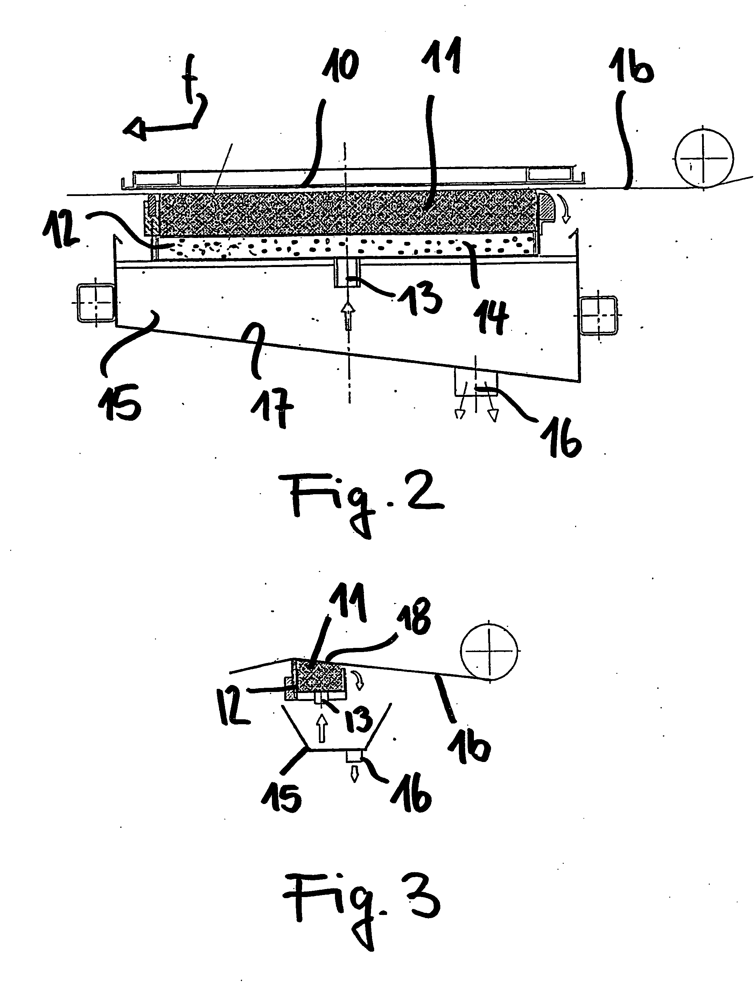

Der Figur 2 kann ein Bandabschnitt 1b entnommen werden, der in horizontaler Richtung verläuft und sich in Richtung des Pfeiles f bewegt.

Auf der Innenseite des Bandes ist in vorteilhafter Weise eine Ebene 10 angeordnet, die als Gegendruckfläche dient. In Übereinstimmung mit dem zu reinigenden Bandabschnitt 1b ist ein Reinigungskissen 11 vorgesehen, das in vorteilhafter Weise im Inneren eines Behälters 12 angeordnet ist, dem über eine Rohrleitung 13 und unter Druck ein Lösungsmittel zugeführt wird. Das Lösungsmittel 14 kann mit gewünschter Dosierung und mit einem einstellbaren Druck zugeführt werden, d.h. in der Art und Weise, dass ein ständiges Befeuchten des Kissens 11 erfolgt und auch ein automatischer Reinigungseffekt des Kissens eintritt.

Es besteht auch die Möglichkeit, die Lösungsflüssigkeit 14 im Überschuss zuzuführen und ein Ablauf der Lösungsflüssigkeit über die Umfangsränder des Behälters 12 zu erlauben. Unterhalb des Behälters 12 ist in vorteilhafter Weise eine Sammelwanne 15 vorgesehen, welche die abgeförderte Lösungsflüssigkeit als auch die vom Bandabschnitt 1b abgelösten Lackreste aufnimmt.

Dieses Material kann über den Stutzen 16 abgefördert werden, um einer Reinigungsanlage zugeführt zu werden. Um zu gewährleisten, dass das Lösungsmittel sowie die in der Wanne 5 gesammelten festen Lackreste automatisch zum Abflußstutzen 16 fließen, ist in vorteilhafter Weise vorgesehen, dass der Boden 17 der Wanne 15 in Richtung des Abflußstutzen 16 geneigt angeordnet ist.

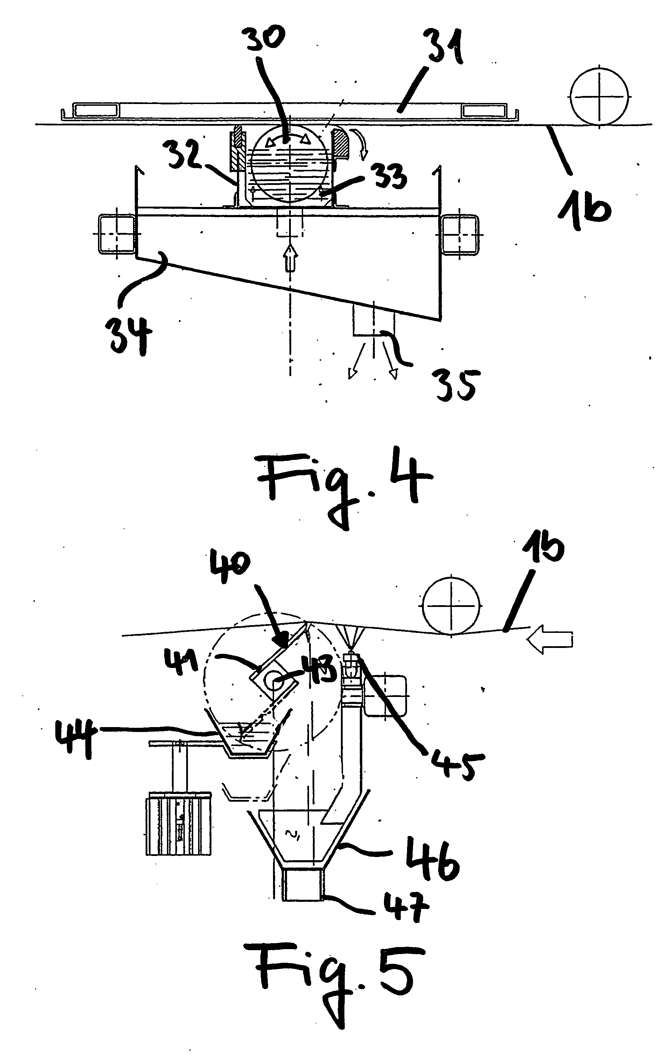

Der Figur 3 kann ein Reinigungskissen 11 entnommen werden, das eine geneigte Fläche 18 aufweist und eine Lageänderung des unteren Bandabschnittes 1b bewirkt, um einen steigenden Bandverlauf zu verwirklichen.

Auch das in Figur 3 dargestellte Kissen 11 ist im Inneren eines Behälters 12 angeordnet, der einen Zulaufstutzen 13 für eine Lösungsmittel aufweist, sowie eine Sammelwanne 15, die mit einem Ablaufstutzen 16 versehen ist.

Den Figuren 4 und 5 kann entnommen werden, dass im Bedarfsfalle den Kissen 4, 11 auch Zusatzeinrichtungen zugeordnet werden können.

So ist in Figur 4 eine Bürstenwalze 30 dargestellt, die über einen Motor angetrieben wird und auf den Bandabschnitt 1b, der entlang einer Gegendruckfläche 31 abläuft, einwirkt.

Die Bürstenwalze 30 ist in einem Behälter 32 angeordnet, der eine Reinigungsflüssigkeit 33 aufnimmt. Über die oberen Ränder des Behälters 32 kann die mit Druck und im Überfluss zugeführte Reinigungsflüssigkeit aus dem Behälter austreten und von der unten liegenden Wanne 34 aufgefangen werden. Diese weist einen Stutzen 35 auf, über den die festen Lackreste sowie die Lösungsflüssigkeit einer Reinigungsvorrichtung zugeführt werden.

In Figur 5 ist dargestellt, dass unter dem Bandabschnitt 1b eine zusätzliche Rakeleinrichtung 40 angeordnet ist. Das Rakelblatt wird von einer sich drehenden Welle 43 gelagert und unterhalb der Welle 43, die das Rakelblatt 41 aufnimmt, ist eine Wanne 44 zur Aufnahme von Lösungsflüssigkeit angeordnet.

Die Wanne 44 ist gesteuert in einer vertikalen Ebene bewegbar, wodurch ermöglicht wird, die Wanne 44 abzusenken, um eine uneingeschränkte Drehbewegung der Welle 43 sowie des Rakelblattes 41 zu ermöglichen, und ferner ein Eintreten in die Lösungsflüssigkeit der Wanne 44 zu erlauben.

Vor der Rakel 41 sind Düsen 45 vorgesehen, über die eine Lösungsflüssigkeit in Richtung des Bandabschnittes 1b versprühbar ist.

Unter den Rakelblättern 40 sowie den Sprühdüsen 45 ist eine Aufnahmewanne 46 vorgesehen, die einen Abflußstutzen 47 aufweist, um ein Zurückführen der festen Lackbestandteile sowie der Lösungsflüssigkeit zu einer Reinigungseinrichtung zu ermöglichen.

Dank der Vorsehung von einem oder mehrerer Reinigungskissen, die auf das untere Teil 1b des Förderbandes 1 einwirken und dank der Zuführung von Lösungsflüssigkeit, wird ein schonender Reinigungsvorgang des Bandes in einer bekannten Lackieranlage ermöglicht und, trotz eines schonenden Einwirkens des Reinigungskissens auf die Bandfläche, tritt ein zufriedenstellender Reinigungseffekt ein, der auch einstellbar oder beeinflussbar ist, indem die Breite des Reinigungskissens in Vorschubrichtung des Bandes gesehen geändert wird.

## Patentansprüche

1. Vorrichtung zum Reinigen eines Transportbandes, das Teile durch eine Lackieranlage fördert, **dadurch gekennzeichnet, dass** gegen die Oberfläche des zu reinigenden Bandes (1) ein Kissen (4,11) aus porösem Material angepresst wird, und dieses Kissen (4,11) mit einer Flüssigkeit (7) befeuchtet wird, die zum Lösen von Lackresten dient.

2. Vorrichtung, nach Patentanspruch 1, **dadurch gekennzeichnet, dass** das Kissen (4) mit einer Kraft (P) gegen den Abschnitt (la) des Transportbandes (1), das sich in einer vertikalen Ebene erstreckt, angepresst wird.

3. Vorrichtung, nach Patentanspruch 1, **dadurch gekennzeichnet, dass** das Kissen (11) mit einer Kraft (P) gegen einen Abschnitt (1b) des Bandes (1) gepresst wird, der sich in einer horizontalen Ebene erstreckt.

4. Vorrichtung, nach Patentanspruch 1, **dadurch gekennzeichnet, dass** das Kissen (4,11) in einem Aufnahmebehälter (5) angeordnet ist.

5. Vorrichtung, nach Patentanspruch 1, **dadurch gekennzeichnet, dass** in Übereinstimmung mit dem Reinigungskissen (4) auf der gegenüberliegenden Seite des zu reinigenden Bandes (1) eine Gegendruckfläche (6) angeordnet ist.

6. Vorrichtung, nach Patentanspruch 1, **dadurch gekennzeichnet, dass** das Reinigungskissen (4) aus widerstandsfähigem, porösem und rauhem Material besteht.

7. Vorrichtung, nach Patentanspruch 1, **dadurch gekennzeichnet, dass** dem Behälter (5) zur Aufnahme des Reinigungskissens (4) eine Wanne (15) zur Aufnahme einer Lösungsflüssigkeit und zur Aufnahme der abgelösten Lackreste zugeordnet ist, wobei Flüssigkeit und Lackreste über die Umfangsränder des Behälters (5) austreten.

8. Vorrichtung, nach patentanspruch 1, **dadurch gekennzeichnet, dass** das Reinigungskissen (11) auf der zum Band (1) hin gerichteten Seite eine geneigte Oberfläche (18) aufweist, die einen steigenden Bandverlauf festlegt.

9. Vorrichtung, nach Patentanspruch 1, **dadurch gekennzeichnet, dass** auf das zu reinigende Band eine über einen Motor angetriebene Bürstenwalze (30) einwirkt und die Bürstenwalze (30) in einem Behälter (32) angeordnet ist, der eine Reinigungsflüssigkeit (33) aufnimmt.

10. Vorrichtung, nach Patentanspruch 1, **dadurch gekennzeichnet, dass** dem zu reinigenden Bandabschnitt (1) eine Rakelvorrichtung (40) zugeordnet ist, die eine Rakel (41) aufnimmt, welche von einer drehbaren Welle (43) aufgenommen wird und das unter der Welle (43) zur Aufnahme der Rakel (41) eine Wanne (44) vorgesehen ist, die eine Reinigungsflüssigkeit aufnimmt, und die Wanne (44) gesteuert in eine Vertikalebene verfahrbar angeordnet ist.

11. Vorrichtung, nach Patentanspruch 1, **dadurch gekennzeichnet, dass** dem zu reinigenden Band (1) eine Anzahl von Düsen (45) zum Versprühen einer Reinigungsflüssigkeit auf das Band (1) vorgesehen sind und unter den Sprühdüsen (45) eine Wanne (46) zum Auffangen der Lösungsflüssigkeit sowie zur Aufnahme der abgelösten festen Lackbestandteile vorgesehen ist.

12. Vorrichtung, nach Patentanspruch 1, **dadurch gekennzeichnet, dass** die Reinigungsflüssigkeit unter Druck an das Kissen (4,11) zugeführt wird.
